# EUROPÄISCHE PATENTSCHRIFT

(11) **EP 3 093 508 B1**
(45) Veröffentlichungstag und Bekanntmachung des Hinweises auf die Patenterteilung: **05.09.2018**
(21) Anmeldenummer: 16164600.5
(22) Anmeldetag: 11.04.2016
(51) Int. Cl.: F16B 13/08

(54) **KIPPDÜBEL UND VERFAHREN ZUR BEFESTIGUNG MIT EINEM KIPPDÜBEL**
TOGGLE FASTENER AND METHOD FOR FIXING WITH A TOGGLE FASTENER
BENNE BASCULANTE ET PROCÉDÉ DE FIXATION D'UNE BENNE BASCULANTE

(30) Priorität: 28.04.2015 DE 102015106493
(43) Veröffentlichungstag der Anmeldung: 16.11.2016
(73) Patentinhaber: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(56) Entgegenhaltungen:
- EP-A1- 0 010 833
- DE-B- 1 121 792
- US-A- 3 605 547

## Beschreibung

Die Erfindung betrifft einen Kippdübel mit den Merkmalen des Oberbegriffs des Anspruchs 1 sowie ein Verfahren zur Befestigung mit einem derartigen Kippdübel.

Aus der Patentschrift DE 1 121 792 ist ein Kippdübel zum Befestigen eines Gegenstandes, beispielsweise einer Lampe, an einem dünnwandigen Bauteil bekannt. Bei dem Bauteil handelt es sich beispielsweise um eine Gipskartonplatte. Der Kippdübel weist einen Balken auf, durch den sich eine Gewindebohrung quer erstreckt. Außerdem steht im Bereich der Gewindebohrung seitlich einstückig ein Band ab. Nach dem Bohren eines Bohrlochs im dünnwandigen Bauteil wird der Kippdübel mit einem Ende voraus durch das Bohrloch geschoben, wobei das Band derart zur Seite gebogen wird, dass es seitlich am Balken anliegt. Sobald der Balken vollständig das Bohrloch passiert hat, kann er in dem hinter dem Bauteil liegenden Hohlraum gekippt werden, so dass der Balken mit einer Tragseite an der Rückseite des Bauteils zur Anlage kommt. Die Kippbewegung wird durch ein Ziehen am Band bewirkt. Gleichzeitig soll sichergestellt werden, dass die Gewindebohrung mit dem Loch fluchtet, so dass eine Schraube in die Gewindebohrung eingedreht werden kann. Mit dieser Schraube kann der Gegenstand an der dem Bediener zugewandten Sichtseite des Bauteils befestigt werden.

Ein ähnlicher Kippdübel ist aus den Dokument US 3,605,547 bekannt. Hier ist zwar einseitig an nur einem Ende des Balkens eine leicht vorstehende Kante vorgesehen, doch ist es auch hier Ziel, dass der Balken flach an der Rückseite des Bauteils zur Anlage kommt, damit die Gewindebohrung gut mit dem Bohrloch fluchtet. Die vorstehende Kante soll sich in die Rückseite des Bauteiles einformen, um eine Verdrehung des Balkens beim Einschrauben der Schraube zu verhindern.

Ein weiterer Kippdübel ist aus dem Dokument EP 0 010 833 A1 bekannt. Auch bei diesem Dübel kommt der Balken flach an der Rückseite des Bauteils zur Anlage. Weiter greift ein Kupplungselement mit einem Gewinde in eine vorgefertigte Bohrung im Bauteil ein. In der Praxis zeigt sich jedoch, dass vor allem beim Eindrehen von Schrauben mit Maschinengewinde immer wieder Schwierigkeiten entstehen. Als "Maschinengewinde" werden hier metrische Regelgewinde in Anlehnung an die DIN 202 (1999-11) oder auf Inch-Maße basierende UNC-Gewinde in Anlehnung an den "Unified Thread Standard" verstanden. Hintergrund ist, dass insbesondere durch die Erstellung des Bohrlochs die Rückseite im Bereich des Bohrlochs Unebenheiten aufweist. Hierdurch kommt es zu einer Schrägstellung der Gewindebohrung, die beim Versuch, die Schraube mit etwas axialem Druck einzuschrauben, noch verstärkt wird.
Aufgabe der Erfindung ist es daher, einen gattungsgemäßen Kippdübel und ein entsprechendes Verfahren zur Befestigung mit einem derartigen Kippdübel zu schaffen, der unabhängig von eventuellen Unebenheiten an der Rückseite des Bauteiles stets ein einfaches Einschrauben ermöglicht.
Diese Aufgabe wird erfindungsgemäß durch die Merkmale des Anspruchs 1 sowie durch das zugehörige Verfahren mit den Merkmalen des Anspruchs 8 gelöst. Der erfindungsgemäße Kippdübel zur Befestigung eines Gegenstandes an einem Bauteil mit einem dahinterliegenden Hohlraum weist einen Balken und ein Band auf, das mit dem Balken verbunden ist. Das Band dient zum Halten des Balkens bei der Montage. Die Verbindung zwischen Balken und Band kann als Drehlager ausgebildet sein, so dass das Band gegenüber dem Balken verschwenkt werden kann. Möglich ist beispielsweise aber auch eine Klipsverbindung. Insbesondere ist die Verbindung einstückig, so dass das Band zusammen mit dem Balken oder mit Teilen des Balkens gefertigt werden kann. Auf der dem Band zugewandten Seite bildet der Balken eine Tragseite zur Anlage am Bauteil. Der Balken erstreckt sich entlang einer Balkenlängsachse. Mit "Balken" ist insbesondere ein Bauteil bezeichnet, dessen Abmessungen quer zur Balkenlängsachse geringer sind, als in Richtung der Balkenlängsachse. Ein gedachter, den Balken umschreibender Zylinder, im Folgenden "Balkenzylinder" genannt, dessen Mittelachse auf der Balkenlängsachse liegt und dessen Radius normal zur Balkenlängsachse ist, weist somit einen Durchmesser auf, der kleiner oder gleich dem Durchmesser eines Lochs im dünnwandigen Bauteil ist, durch das der Balken eingebracht wird, um einen Gegenstand mit dem Kippdübel am dünnwandigen Bauteil zu befestigen. Die Erstreckung des Balkens in Richtung der Balkenlängsachse ist größer als der Durchmesser des Lochs, so dass der Balken nach dem Kippen im Hohlraum sich nicht mehr aus dem Bohrloch heraus bewegen kann, wenn er mit der Tragseite an der Rückseite des Bauteils anliegt. Der Balken weist eine Öffnung zur Aufnahme einer Schraube auf. Die Öffnung weist insbesondere ein Innengewinde auf. Das Innengewinde ist vorzugsweise ein Maschinengewinde, so dass die bei Kippdübeln häufig verwendeten Sechskantschrauben mit Maschinengewinde in das Innengewinde eingeschraubt werden können. Die Öffnung erstreckt sich entlang einer Öffnungslängsachse quer zur Balkenlängsachse, wobei "quer" hier bedeutet, dass die Öffnungslängsachse und die Balkenlängsachse nicht parallel oder identisch sind. Insbesondere sind die beiden Längsachsen im Wesentlichen orthogonal zueinander, wobei sie sich insbesondere schneiden können. Die Öffnungslängsachse definiert eine Öffnungsquerschnittsebene, die senkrecht zur Öffnungslängsachse steht.

Wie bei den bekannten Kippdübeln wird vor dem ersten Schritt des erfindungsgemäßen Verfahrens zur Befestigung zunächst ein Loch in dem Bauteil erstellt. Dies erfolgt insbesondere durch Bohren, kann jedoch auch anderweitig, insbesondere mit dem Kippdübel selbst als drehendes und/oder schlagendes Werkzeug, erfolgen. Der Kippdübel wird mit einem Ende des Balkens voraus durch das Loch gesteckt und dann um eine Kippachse gekippt. Die Kippachse steht im Wesentlichen senkrecht zur Balkenlängsachse und zur Öffnungslängsachse. Zum Halten beim Kippen und anschließenden Heranziehen an die Rückseite des Bauteiles dient das Band. Durch das Heranziehen kommt der Balken auf der Tragseite zur Anlage an der Rückseite des Bauteils. Im Gegensatz zum Stand der Technik ist es dabei erfindungsgemäß nicht Ziel, dass die Öffnungslängsachse möglichst senkrecht zur Rückseite und parallel zu einer Längsachse des Lochs steht, sondern es soll gezielt zu einer Schrägstellung kommen. Dazu weist der Kippdübel auf der Tragseite erfindungsgemäß Auflagerpunkte auf, die eine Anlageebene definieren, die mindestens zwei Grad schräg zur Öffnungsquerschnittsebene steht. Die Auflagerpunkte sind jene Punkte, die von der Balkenlängsachse aus betrachtet am weitesten in Richtung der Tragseite ragen. Nicht betrachtet werden dabei gegebenenfalls vorhandene Vorsprünge im Bereich der Öffnung, die bei fertig gestellter Befestigung im Loch angeordnet sind. "Im Bereich der Öffnung" meint hier den Bereich innerhalb eines gedachten Kreises um die Öffnungslängsachse, der im Wesentlichen den gleichen Durchmesser wie der Balkenzylinder hat.

Zum Einschrauben der Schraube in die Öffnung wird die Schraube zunächst durch das Loch hindurch in die Öffnung eingeführt. Dabei steht aufgrund der Schrägstellung der Anlageebene auch bei geringen Unebenheiten auf der Rückseite des Bauteiles die Schraubenlängsachse schräg zur Öffnungslängsachse. Durch eine axiale Kraft auf die Schraube in Richtung des Balkens wird dieser erfindungsgemäß derart gekippt, dass die Schraubenlängsachse parallel zur Öffnungslängsachse steht. Egal ob der Balken also aufgrund von Unebenheiten auf der Rückseite mehr oder weniger schräg steht, wird er durch einen Druck auf die Schraube, den der Bediener erfahrungsgemäß intuitiv ausübt, automatisch zu dem Punkt kommen, bei dem die Schraubenlängsachse parallel zur Öffnungslängsachse steht und das Gewinde der Schraube im Innengewinde der Öffnung greift.

Vorzugsweise formt sich beim Einschrauben, spätestens aber beim Festziehen der Schraube, ein Auflagerpunkt in die Rückseite des Bauteils ein. Hierdurch wird eine Sicherung gegen Verdrehen des Balkens beim Einschrauben und/oder Festziehen der Schraube erreicht. Vorzugsweise weist der Kippdübel dazu mindestens einen Auflagerpunkt auf, der durch einen Vorsprung gebildet wird, wobei der Vorsprung insbesondere nasenförmig ist.

Bevorzugt ist, dass die Schraube derart angezogen wird, dass der Balken mit einer Anlagefläche auf der Rückseite zur Anlage kommt. Die Anlagefläche ist im Wesentlichen parallel zur Balkenlängsachse und senkrecht zur Öffnungslängsachse angeordnet. Durch eine flächige Anlage wird erreicht, dass sich der Balken bei auftretenden Lasten nicht punktuell in die Rückseite des Bauteils einformt, sondern dass die Last gleichmäßig auf der Rückseite des Bauteils verteilt wird. Dadurch, dass die Anlagefläche senkrecht zur Öffnungslängsachse steht, wird bei einem Zug entlang der Schraubenlängsachse, wie er beispielsweise bei einer Deckenlampe typischerweise auftritt, die Zugkraft optimal von der Schraube auf den Balken übertragen.

Für die Stabilität des Balkens ist dessen Querschnitt und Länge entscheidend. Der Durchmesser des den Balken umschreibenden Balkenzylinders bestimmt über die maximal erreichbare Stabilität des Querschnitts hinaus auch den Durchmesser des Lochs, das mindestens im Bauteil erstellt werden muss, damit der Balken hindurchgesteckt werden kann. Die Ausbildung der Anlageebene ist hiermit in Einklang zu bringen. Die Erfindung schlägt daher vor, dass die Anlageebene maximal zehn Grad, insbesondere maximal fünf Grad, schräg zur Öffnungsquerschnittsebene steht, wobei die Öffnungsquerschnittsebene insbesondere parallel zur Balkenlängsachse steht. Wird, wie oben als bevorzugt dargestellt, eine senkrecht zur Öffnungslängsachse stehende Anlagefläche ausgebildet, so muss zwar der Querschnitt des Balkens gegenüber einem Vollkreis verringert werden, es ergibt sich aber immer noch ein gutes Zusammenspiel aus Montierbarkeit der Schraube und Tragfähigkeit des Balkens.

Vorzugsweise sind die Auflagerpunkte jeweils in einem von der Öffnung entfernten Drittel der Längserstreckung des Balkens angeordnet. Da mögliche Unebenheiten auf der Rückseite des Bauteiles inbesondere durch die Erstellung des Lochs und in dessen Nähe auftreten, wird durch diese Anordnung der Auflagerpunkte eher eine definierte Ausrichtung des Balkens erreicht als es bei Auflagerpunkten nahe der Öffnung der Fall wäre. Auch ist ein Einformen durch Eindringen in die Rückseite, wie es oben als bevorzugt beschrieben ist, weniger gefährlich bezüglich eines möglichen Ausbrechens und Versagens des Bauteiles bei höheren Lasten. Der Grund hierfür ist, dass das Gefüge des Bauteiles im näheren Umkreis des Lochs häufig durch die Erstellung des Lochs vorgeschädigt ist.

Um eine möglichst große Anlagefläche zu erreichen, schlägt die Erfindung vor, dass mindestens ein Auflagerpunkt durch einen, insbesondere nasenförmigen, Vorsprung gebildet wird. Ein nasenförmiger Vorsprung hat außerdem den Vorteil, dass er bei geringen Kräften, insbesondere bis zum Greifen der Schraube im Innengewinde der Öffnung, nicht in den Bauteil eindringt, während der Vorsprung bei größeren Kräften, insbesondere beim Anziehen der Schraube, eindringen kann.

Vorzugsweise liegt der Vorsprung innerhalb des Balkenzylinders, also innerhalb eines gedachten Zylinders, der den restlichen Balken umschreibt. Dies hat den Vorteil, dass durch den Vorsprung kein größeres Loch im Bauteil gebraucht wird, als ohne den Vorsprung, was von Vorteil ist, da meist ein möglichst kleines Loch gewünscht ist. Anders ausgedrückt wird der durch das Loch vorgegebene Querschnitt optimal sowohl im Sinnes eines stabilen Querschnitts als auch im Sinne der Ausbildung eines Vorsprungs genutzt.

Um sicherzustellen, dass der Balken beim Einführen der Schraube um den richtigen Auflagerpunkt kippt, also derart, dass eine Stellung erreicht wird, in der die Schraubenlängsachse parallel zur Öffnungslängsachse steht, schlägt die Erfindung vor, dass der Vorsprung bezüglich der Öffnungslängsachse auf der gleichen Seite angeordnet ist wie eine Verbindungsstelle, an der das Band mit dem Balken verbunden ist. Das Band wird während des Einführens der Schraube entweder von Hand oder durch eine Hülse am Band, die auf einer Vorderseite des Bauteils anliegt, gehalten. Dabei kann beispielsweise das Band selbst, die Verbindungsstelle zum Balken, die Hülse oder eine haltende Hand etwas nachgeben. Es wird jedoch eine Kraft erzeugt, die der axialen Kraft der Schraube entgegenwirkt. Aus beiden Kräften ergibt sich ein resultierendes Drehmoment bezüglich der Auflagerpunkte. Liegt die Verbindungsstelle wie vorgeschlagen auf der gleichen Seite wie der Vorsprung, so wird das resultierende Drehmoment um den Vorsprung größer sein als um einen möglichen Auflagerpunkt auf der anderen Seite des Balkens, so dass der Balken wie gewünscht um den Vorsprung kippt. Unterstützt wird dies, indem der Vorsprung gleichweit oder näher an der Öffnungslängsachse liegt als ein Auflagerpunkt auf der anderen Seite des Balkens.

Die Erfindung wird nachfolgend anhand eines Ausführungsbeispiels erläutert.

Es zeigen:
- Figur 1: den erfindungsgemäßen Kippdübel in einer Seitenansicht;
- Figur 2: denselben Kippdübel in einer Stirnansicht gemäß Pfeil II aus Figur 1 beim Durchführen durch ein Loch in einem Bauteil;
- Figur 3: denselben Kippdübel in einer Seitenansicht beim Durchführen durch ein Loch in einem Bauteil;
- Figur 4: denselben Kippdübel in einer Schnittdarstellung beim Einführen der Schraube in die Öffnung des Balkens;
- Figur 5: denselben Kippdübel in einer Schnittdarstellung beim Einführen der Schraube in die Öffnung des Balkens nach dem Kippen; und
- Figur 6: denselben Kippdübel in einer Schnittdarstellung nach dem Anziehen der Schraube.

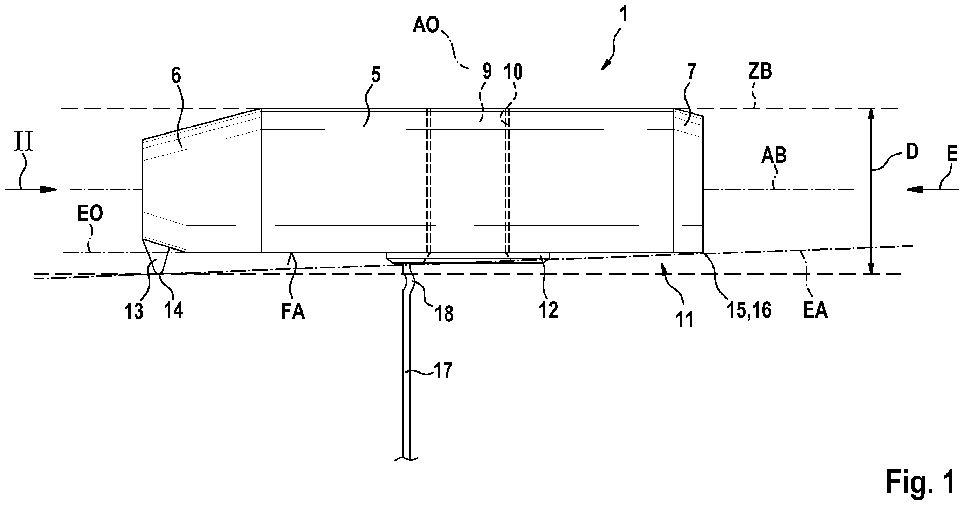

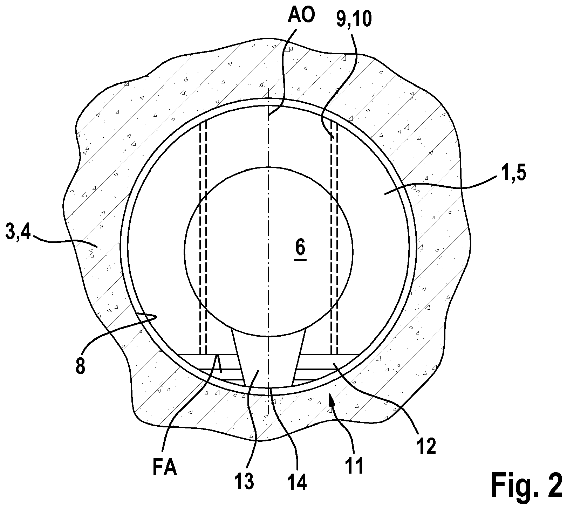

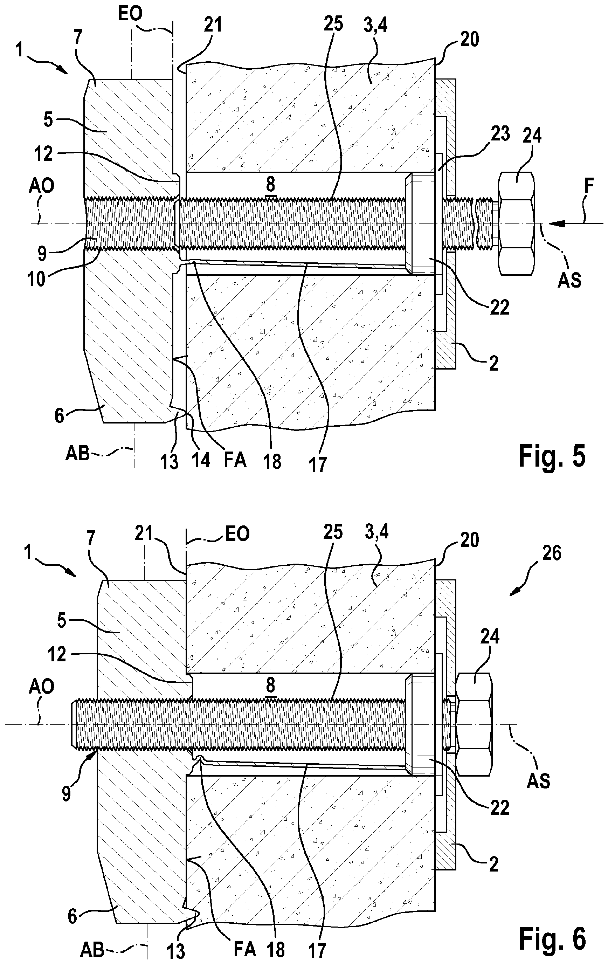

Der in den Figuren dargestellte Kippdübel 1 dient, wie in Figur 6 dargestellt, der Befestigung eines Gegenstands 2 an einem Bauteil 3, hier eine Gipskartonplatte 4. Bevor auf das Verfahren zur Befestigung eingegangen wird, erfolgt anhand von Figur 1 und Figur 2 eine Beschreibung des Kippdübels 1.

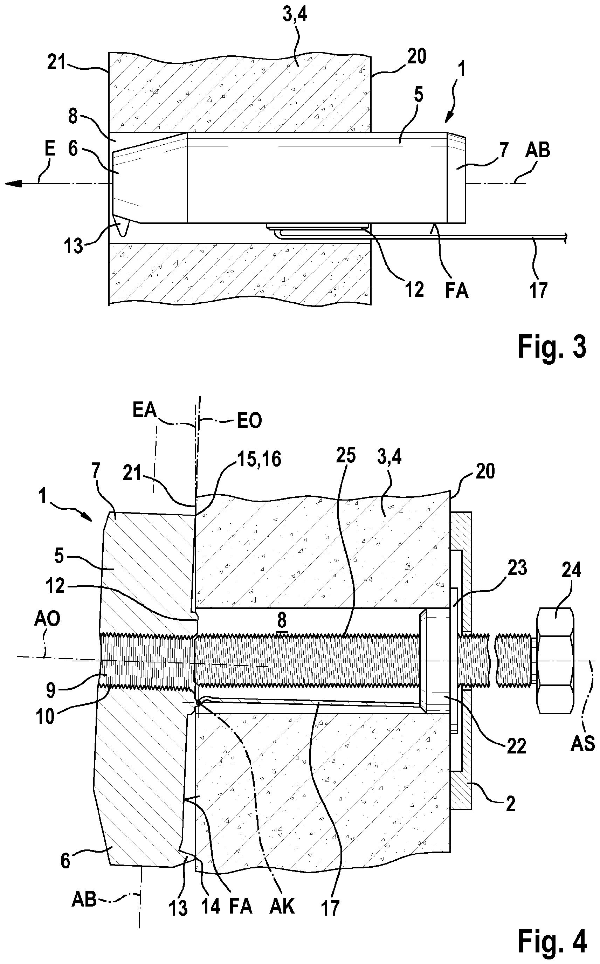

Der Kippdübel 1 weist einen Balken 5 aus Kunststoff mit einer zylindrischen Grundform auf, die sich entlang einer Balkenlängsachse AB erstreckt. An einem vorderen Ende 6 läuft der Balken 5 kegelstumpfförmig mit einem Kegelwinkel von etwa 30 Grad zu, während er an einem hinteren Ende 7 zwar auch kegelstumpfförmig mit dem gleichen Kegelwinkel, jedoch kürzer zuläuft. "Vorne" und "Hinten" bezieht sich auf eine Einsteckrichtung E, mit der der Kippdübel 1 in ein Loch 8 im Bauteil 3 eingesteckt wird, worauf anhand Figur 3 noch näher eingegangen wird. Quer und senkrecht zur Balkenlängsachse AB ist der Balken 5 von einer Öffnung 9 mit einem durchgehenden Innengewinde 10 entlang einer Öffnungslängsachse AO durchsetzt. Senkrecht zur Öffnungslängsachse AO steht eine Öffnungsquerschnittsebene EO. Die Öffnungsquerschnittsebene EO fällt, wie in Figur 1 dargestellt, zusammen mit einer Anlagefläche FA auf einer Tragseite 11 des Balkens 5. Die Anlagefläche FA ist eine parallel zur Balkenlängsachse AB versetzte Ebene, die Balken 5 sekantenartig abschneidet. Dies wird aus Figur 2 deutlich, wobei der Kippdübel 1 hier etwas größer dargestellt ist.

Um die Öffnung 9 herum steht ein ringförmiger Fortsatz 12 ab, der die Öffnung 9 nach Art einer Einführfase verlängert. Der äußere Durchmesser des Fortsatzes 12 entspricht etwa dem Durchmesser D eines gedachten Zylinders ZB, der den Balken 5 umschreibt. Das in Figur 2 gezeigte Loch 8 entspricht in seinem Durchmesser ebenfalls in etwa dem Durchmesser D des gedachten Zylinders ZB.

Am vorderen Ende 6 des Balkens 5 ragt ein nasenförmiger Vorsprung 13 auf der Tragseite 11 ab. Wie insbesondere aus Figur 2 deutlich wird, ist der Vorsprung 13 so groß, dass er gerade noch vom gedachten Zylinder ZB umschlossen wird. Die Spitze des Vorsprungs 13 bildet einen ersten Auflagerpunkt 14. Ein zweiter Auflagerpunkt 15 ist am hinteren Ende 7 des Balkens 5 am hinteren Ende der Anlagefläche FA, wo diese mit dem vorderen Ende 6 des Balkens 5 eine gerade Kante 16 bildet. Da es sich um eine gerade Kante 16 handelt, ist der zweite Auflagerpunkt 15 tatsächlich eine kurze Strecke. Anders ausgedrückt bildet die Kante 16 weitere Auflagerpunkte. Die Auflagerpunkte 14, 15 definieren gemeinsam eine Anlageebene EA, die schräg in einem Winkel von etwa 3 Grad zur Öffnungsquerschnittsebene EO steht.

Vom Fortsatz 12 steht auf der vorderen Seite der Öffnung 9 parallel zur Öffnungslängsachse AO einstückig ein Band 17 ab. Das Band 17 weist nahe dem Fortsatz eine kurze Kröpfung 18 und ansonsten einen geraden Verlauf auf. Einseitig weist das Band 17 eine nicht dargestellte Zahnleiste auf. Das Band 17 ist über eine Verbindungsstelle 19 mit dem Balken 5 verbunden.

Anhand der Figuren 2 bis 6 wird nachfolgend die Befestigung des Gegenstandes 2 an der Gipskartonplatte 4 erläutert. Zunächst wird dazu das Loch 8 in das Bauteil 3 eingebracht, insbesondere gebohrt. Danach wird der Kippdübel 1 von einer Vorderseite 20 des Bauteils 3 aus wie in Figur 2 und 3 dargestellt mit dem vorderen Ende 6 des Balkens 5 voraus durch das Loch 8 geschoben. Das Band 17 wird dazu im Bereich der Verbindungsstelle 19 und der Kröpfung 18 derart gebogen, dass es in etwa parallel zur Balkenlängsachse AB steht. Das Band 17 kann beim Durchschieben des Balkens 5 zur Manipulation des Balkens 5 verwendet werden. Sobald der Balken 5 vollständig das Loch 8 passiert hat, bewirkt die Elastizität des Bands 17, an dem der Balken 5 von der Vorderseite 20 gehalten werden kann, dass der Kippdübel 1 um eine Kippachse AK gekippt wird, die senkrecht sowohl zur Balkenlängsachse AB als auch zur Öffnungslängsachse AO steht und etwa durch die Verbindungsstelle 19 verläuft (siehe Figur 4). Durch Zug an dem Band 17 wird der Balken 5 gegen die Rückseite 21 des Bauteils 3 gezogen, wie dies in Figur 4 dargestellt ist. Dabei kommen die Auflagerpunkte 14, 15 in Kontakt mit der Rückseite 21, so dass die Anlageebene EA parallel zur Rückseite 21 steht. Um den Balken 5 in dieser Position zu halten, ist an der Vorderseite 20 im Loch 8 eine Hülse 22 angeordnet mit einem Kragen 23, der sich an der Vorderseite 20 abstützt. In der Hülse 22 ist außermittig eine Durchgangsöffnung mit einer Sperrklinke (nicht dargestellt) für das Band 17 mit seiner Zahnleiste angeordnet. Die Hülse 22 wird in die in Figur 4 dargestellte Position geschoben, wobei die Sperrklinke derart in der Zahnleiste verrastet, dass ein Zurückschieben nicht möglich ist. Die Hülse 22 hält somit über das Band 17 den Balken 5. Der die Hülse 22 überragende Teil des Bands 17 wird vom Anwender gekappt. Im nächsten Schritt wird eine Schraube 24 durch den Gegenstand 2, die Hülse 22 und das Loch 8 hindurch bis zum Balken 5 geschoben und in die Öffnung 9 eingeschoben. Das Einschieben erfolgt allerdings nur im Bereich des Fortsatzes 12. Eine Schraubenlängsachse AS der Schraube 24 steht dabei schräg zur Öffnungslängsachse AO des Innengewindes 10, so dass ein Außengewinde 25 nicht im Innengewinde 10 der Öffnung 9 greifen kann. Durch eine axiale Kraft F auf die Schraube 24, also beispielsweise durch leichtes Drücken mittels eines Akkuschraubers, kippt der Balken 5 in die in Figur 5 dargestellte Position, in der die Schraubenlängsachse AS und die Öffnungslängsachse AO miteinander fluchten. Das Kippen erfolgt um den ersten Auflagerpunkt 14 am Vorsprung 13. Der Kraft F wirkt dabei das Band 17 entgegen, das jedoch aufgrund der Kröpfung 18 elastisch nachgeben kann. Da die Verbindungsstelle 19 bezüglich der Öffnungslängsachse AO auf der gleichen Seite wie der Vorsprung 13 liegt und der Vorsprung 13 außerdem etwas weiter weg von der Öffnung 9 als der zweite Auflagerpunkt 15 liegt, kommt es zu einem Kippen um den ersten Auflagerpunkt 14, und nicht um den zweiten Auflagerpunkt 15. Schon während des Kippens wird die Schraube 24 vorzugsweise gedreht, so dass ihr Außengewinde 25 sofort greift, wenn die in Figur 5 dargestellte Position erreicht wird. Hierdurch wird verhindert, dass der Balken 5 zu weit kippen kann. Allerdings rutscht auch ohne gleichzeitiges Drehen die Schraube 24 in diesem Moment etwas weiter in die Öffnung 9, was dem Bediener signalisiert, dass die richtige axiale Kraft F vorliegt. Auch wenn die Rückseite 21 nicht so eben wie dargestellt ausgebildet sein sollte, funktioniert dieses Verfahren, da der Balken 5 immer zunächst mehr oder weniger schräg zur Schraube 24 steht und erst durch die axiale Kraft F die dargestellte Ausrichtung erfolgt. Durch weiteres Drehen der Schraube 24 wird diese in die Öffnung 9 eingeschraubt und schließlich derart angezogen, dass der Balken 5 gegen die Rückseite 21 verspannt wird. Dabei formt sich der der Vorsprung 13 in die Rückseite 21 ein, was den Balken 5 gegen unbeabsichtigtes Verdrehen um die Öffnungslängsachse AO sichert. Schließlich kommt die Anlagefläche FA zur Anlage an die Rückseite 21 des Bauteils 3, wie in Figur 6 dargestellt. Da die Anlagefläche FA groß ist, kann eine gegebenenfalls auftretende Zugkraft, die vom Gegenstand 2 auf die Schraube 24 übertragen wird, gleichmäßig verteilt werden. Somit können hohe Lasten übertragen werden.

Der Kippdübel 1 bildet zusammen mit dem Bauteil 3 und der Schraube 24 eine Befestigungsanordnung 26.

### Bezuqszeichenliste

- 1: Kippdübel
- 2: Gegenstand
- 3: Bauteil
- 4: Gipskartonplatte
- 5: Balken
- 6: vorderes Ende des Balkens 5
- 7: hinteres Ende des Balkens 5
- 8: Loch im Bauteil 3
- 9: Öffnung
- 10: Innengewinde
- 11: Tragseite
- 12: Fortsatz
- 13: nasenförmiger Vorsprung
- 14: erster Auflagerpunkt
- 15: zweiter Auflagerpunkt
- 16: Kante
- 17: Band
- 18: Kröpfung
- 19: Verbindungsstelle zwischen dem Band 17 und dem Balken 5
- 20: Vorderseite des Bauteils 3
- 21: Rückseite des Bauteils 3
- 22: Hülse
- 23: Kragen
- 24: Schraube
- 25: Außengewinde der Schraube 24
- 26: Befestigungsanordnung
- AB: Balkenlängsachse
- AK: Kippachse
- AO: Öffnungslängsachse
- AS: Schraubenlängsachse
- D: Durchmesser des gedachten Zylinders ZB um den Balken 5
- E: Einsteckrichtung
- F: axiale Kraft auf die Schraube 24
- EA: Anlageebene
- EO: Öffnungsquerschnittsebene
- FA: Anlagefläche
- ZB: gedachter Zylinder um den Balken 5

## Patentansprüche

1. Kippdübel (1) zur Befestigung eines Gegenstandes (2) an einem Bauteil (3), wobei der Kippdübel (1) einen Balken (5) und ein Band (17) aufweist, das mit dem Balken (5) verbunden ist und zum Halten des Balkens (5) bei der Montage dient,
wobei sich der Balken (5) entlang einer Balkenlängsachse (AB) erstreckt und auf der dem Band (17) zugewandten Seite eine Tragseite (11) zur Anlage am Bauteil (3) aufweist, und
wobei der Balken (5) eine Öffnung (9), insbesondere mit einem Innengewinde (10), zur Aufnahme einer Schraube (24) aufweist, wobei sich die Öffnung (9) entlang einer Öffnungslängsachse (AO) quer zur Balkenlängsachse (AB) erstreckt, wobei die Öffnungslängsachse (AO) senkrecht zu einer Öffnungsquerschnittsebene (EO) steht,
**dadurch gekennzeichnet,**
**dass** auf der Tragseite (11) Auflagerpunkte (14, 15) angeordnet sind, die eine Anlageebene (EA) definieren, die mindestens 2 Grad schräg zur Öffnungsquerschnittsebene (EO) steht.

2. Kippdübel nach Anspruch 1, **dadurch gekennzeichnet, dass** die Anlageebene (EA) maximal 10 Grad, insbesondere maximal 5 Grad, schräg zur Öffnungsquerschnittsebene (EO) steht.

3. Kippdübel nach Anspruch 1 oder 2, **dadurch gekennzeichnet, dass** die Auflagerpunkte (14, 15) jeweils in einem von der Öffnung (9) entfernten Drittel der Längserstreckung des Balkens (5) angeordnet sind.

4. Kippdübel nach einem der vorstehenden Ansprüche, **dadurch gekennzeichnet, dass** mindestens ein Auflagerpunkt (14) durch einen, insbesondere nasenförmigen, Vorsprung (13) gebildet wird.

5. Kippdübel nach Anspruch 4, **dadurch gekennzeichnet, dass** der Vorsprung (13) innerhalb eines gedachten Zylinders (ZB) liegt, der den restlichen Balken (5) umschreibt.

6. Kippdübel nach Anspruch 4 oder 5, **dadurch gekennzeichnet, dass** der Vorsprung (13) bezüglich der Öffnungslängsachse (AO) auf der gleichen Seite angeordnet ist wie eine Verbindungsstelle (19), an der das Band (17) mit dem Balken (5) verbunden ist.

7. Kippdübel nach einem der vorstehenden Ansprüche, **dadurch gekennzeichnet, dass** die Öffnung (9) ein als Maschinengewinde ausgebildetes Innengewinde (10) aufweist.

8. Verfahren zur Befestigung mit einem Kippdübel (1) nach einem der vorstehenden Ansprüche,
wobei der Balken (5) durch ein Loch (8) in einem Bauteil (3) gesteckt und auf einer Rückseite (21) des Bauteils (3) um eine Kippachse (AK), die im Wesentlichen senkrecht zur Öffnungslängsachse (AO) und zur Balkenlängsachse (AB) steht, gekippt und mittels des Bands (17) zur Rückseite (21) des Bauteils (3) gezogen wird, so dass der Balken (5) auf der Tragseite (11) zur Anlage an der Rückseite (21) kommt,
und wobei danach eine Schraube (24) durch das Loch (8) hindurch in das Innengewinde (10) der Öffnung (9) eingeführt und eingeschraubt wird,
**dadurch gekennzeichnet, dass** eine Schraubenlängsachse (AS) beim Einführen in die Öffnung (9) zunächst schräg zur Öffnungslängsachse (AO) steht, und durch eine axiale Kraft (F) auf die Schraube (24) der Balken (5) derart gekippt wird, dass die Schraubenlängsachse (AS) parallel zur Öffnungslängsachse (AO) steht.

9. Verfahren nach Anspruch 8, **dadurch gekennzeichnet, dass** beim Einschrauben oder Festziehen der Schraube (24) mindestens ein Auflagerpunkt (14), insbesondere ein den Auflagerpunkt (14) bildender Vorsprung (13), sich in die Rückseite (21) des Bauteils (3) einformt.

10. Verfahren nach Anspruch 8, **dadurch gekennzeichnet, dass** die Schraube (24) derart angezogen wird, dass der Balken (5) mit einer Anlagefläche (FA), die im Wesentlichen parallel zur Balkenlängsachse (AB) und senkrecht zur Öffnungslängsachse (AO) steht, auf der Rückseite (21) zur Anlage kommt.

## Claims

1. Toggle fixing (1) for fixing an article (2) to a building component (3), wherein the toggle fixing (1) has a crosspiece (5) and a strip (17) which is connected to the crosspiece (5) and serves for holding the crosspiece (5) during mounting, wherein the crosspiece (5) extends along a crosspiece longitudinal axis (AB) and has a supporting side (11) on the side facing towards the strip (17) for contact with the building component (3), and
wherein the crosspiece (5) has an opening (9), in particular with an internal thread (10), for receiving a screw (24), wherein the opening (9) extends along an opening longitudinal axis (AO) transverse with respect to the crosspiece longitudinal axis (AB), wherein the opening longitudinal axis (AO) is perpendicular to an opening cross-sectional plane (EO),
**characterised in that**
on the supporting side (11) there are arranged bearing points (14, 15) which define a contact plane (EA) which is inclined at an angle of at least 2 degrees relative to the opening cross-sectional plane (EO).

2. Toggle fixing (1) according to claim 1, **characterised in that** the contact plane (EA) is inclined at an angle of not more than 10 degrees, in particular not more than 5 degrees, relative to the opening cross-sectional plane (EO).

3. Toggle fixing according to claim 1 or 2, **characterised in that** the bearing points (14, 15) are each arranged in a third of the longitudinal extent of the crosspiece (5) that is remote from the opening (9).

4. Toggle fixing according to any one of the preceding claims, **characterised in that** at least one bearing point (14) is formed by a projection (13), in particular a nose-shaped projection.

5. Toggle fixing according to claim 4, **characterised in that** the projection (13) lies within an imaginary cylinder (ZB) which circumscribes the remainder of the crosspiece (5).

6. Toggle fixing according to claim 4 or 5, **characterised in that** the projection (13) is arranged on the same side, relative to the opening longitudinal axis (AO), as a connection point (19) at which the strip (17) is connected to the crosspiece (5).

7. Toggle fixing according to any one of the preceding claims, **characterised in that** the opening (9) has an internal thread (10) in the form of a machine thread.

8. Method of fixing using a toggle fixing (1) according to any one of the preceding claims,
wherein the crosspiece (5) is pushed through a hole (8) in a building component (3) and is tilted on a rear side (21) of the building component (3) about a tilt axis (AK) which is substantially perpendicular to the opening longitudinal axis (AO) and to the crosspiece longitudinal axis (AB), and is pulled by means of the strip (17) towards the rear side (21) of the building component (3) so that the supporting side (11) of the crosspiece (5) comes into contact with the rear side (21),
and wherein a screw (24) is then inserted through the hole (8) into the internal thread (10) of the opening (9) and screwed in,
**characterised in that** a screw longitudinal axis (AS) is initially inclined relative to the opening longitudinal axis (AO) when the screw is inserted into the opening (9), and the crosspiece (5) is tilted by an axial force (F) on the screw (24) in such a way that the screw longitudinal axis (AS) is parallel to the opening longitudinal axis (AO).

9. Method according to claim 8, **characterised in that**, when the screw (24) is screwed in or tightened, at least one bearing point (14), in particular a projection (13) forming the bearing point (14), engages in the rear side (21) of the building component (3).

10. Method according to claim 8, **characterised in that** the screw (24) is tightened in such a way that the crosspiece (5) comes into contact on the rear side (21) with a contact surface (FA) which is substantially parallel to the crosspiece longitudinal axis (AB) and perpendicular to the opening longitudinal axis (AO).

## Revendications

1. Cheville basculante (1) dévolue à la fixation d'un objet (2) à une partie structurelle (3),
ladite cheville basculante (1) comportant un fût (5) et une bande (17) reliée audit fût (5) et servant à la retenue dudit fût (5) au stade du montage,
le fût (5) s'étendant le long d'un axe longitudinal (AB) et étant muni, du côté tourné vers la bande (17), d'une face de support (11) conçue pour venir en applique contre la partie structurelle (3), et
ledit fût (5) comportant un orifice (9) notamment doté d'un filetage intérieur (10), en vue de recevoir une vis (24), lequel orifice (9) s'étend le long d'un axe longitudinal (AO), transversalement par rapport à l'axe longitudinal (AB) dudit fût, ledit axe longitudinal (AO) de l'orifice étant perpendiculaire à un plan de section transversale (EO) dudit orifice,
**caractérisée par le fait que**
des points d'appui (14, 15), disposés sur la face de support (11), définissent un plan de contact (EA) incliné d'au moins 2 degrés par rapport au plan de section transversale (EO) de l'orifice.

2. Cheville basculante selon la revendication 1, **caractérisée par le fait que** le plan de contact (EA) est incliné au maximum de 10 degrés, notamment de 5 degrés au maximum, par rapport au plan de section transversale (EO) de l'orifice.

3. Cheville basculante selon la revendication 1 ou 2, **caractérisée par le fait que** les points d'appui (14, 15) sont respectivement situés à un tiers de l'étendue longitudinale du fût (5), à distance de l'orifice (9).

4. Cheville basculante selon l'une des revendications précédentes, **caractérisée par le fait qu'**au moins un point d'appui (14) est formé par une saillie (13) notamment en forme d'ergot.

5. Cheville basculante selon la revendication 4, **caractérisée par le fait que** la saillie (13) se trouve à l'intérieur d'un cylindre virtuel (ZB) circonscrivant la partie restante du fût (5).

6. Cheville basculante selon la revendication 4 ou 5, **caractérisée par le fait que** la saillie (13) est située, par rapport à l'axe longitudinal (AO) de l'orifice, du même côté qu'une zone de liaison (19) au niveau de laquelle la bande (17) est reliée au fût (5).

7. Cheville basculante selon l'une des revendications précédentes, **caractérisée par le fait que** l'orifice (9) comporte un filetage intérieur (10) réalisé en tant que filetage venu d'usinage machine.

8. Procédé de fixation recourant à une cheville basculante (1) conforme à l'une des revendications précédentes,
le fût (5) étant enfiché à travers un trou (8) pratiqué dans une partie structurelle (3) et étant animé d'un basculement, sur une face postérieure (21) de ladite partie structurelle (3), autour d'un axe de basculement (AK) substantiellement perpendiculaire à l'axe longitudinal (AO) de l'orifice et à l'axe longitudinal (AB) dudit fût, puis tiré vers ladite face postérieure (21) de la partie structurelle (3), au moyen de la bande (17), de telle sorte que ledit fût (5) vienne en applique contre ladite face postérieure (21), sur la face de support (11),
et une vis (24) étant ensuite insérée dans le filetage intérieur (10) de l'orifice (9), en traversant ledit trou (8), puis vissée,
**caractérisé par le fait qu'**un axe longitudinal (AS) de la vis est tout d'abord incliné par rapport à l'axe longitudinal (AO) de l'orifice, lors de l'insertion dans ledit orifice (9), et le fût (5) est animé, sous l'effet d'une force axiale (F) appliquée à ladite vis (24), d'un basculement tel que ledit axe longitudinal (AS) de ladite vis soit parallèle audit axe longitudinal (AO) dudit orifice.

9. Procédé selon la revendication 8, **caractérisé par le fait qu'**au moins un point d'appui (14), en particulier une saillie (13) formant ledit point d'appui (14), vient mordre dans la face postérieure (21) de la partie structurelle (3) au stade du vissage ou du blocage de la vis (24).

10. Procédé selon la revendication 8, **caractérisé par le fait que** la vis (24) est bloquée de façon telle que le fût (5) vienne en applique, contre la face postérieure (21), par une face de contact (FA) substantiellement parallèle à l'axe longitudinal (AB) dudit fût et perpendiculaire à l'axe longitudinal (AO) de l'orifice.
